# EUROPÄISCHE PATENTSCHRIFT

(11) **EP 1 213 805 B1**
(45) Veröffentlichungstag und Bekanntmachung des Hinweises auf die Patenterteilung: **26.07.2006**
(21) Anmeldenummer: 01129418.8
(22) Anmeldetag: 10.12.2001
(51) Int. Cl.: H02B 1/32, H04Q 1/10

(54) **Schrank der elektrischen Hausinstallation**
Electrical cabinet for building
Armoire électrique pour habitation

(30) Priorität: 08.12.2000 DE 10061709
(43) Veröffentlichungstag der Anmeldung: 12.06.2002
(73) Patentinhaber: Hager Electro GmbH, 66131 Saarbrücken (DE)
(72) Erfinder: Scherer, Peter, 67657 Kaiserslautern (DE); Isberg, Martin, 66440 Blieskastel (DE)
(74) Vertreter: Bernhardt, Winfrid

(56) Entgegenhaltungen:
- EP-A- 0 270 438
- FR-A- 2 670 845
- US-A- 6 086 415

## Beschreibung

Die Erfindung geht aus von einem Schrank der elektrischen Hausinstallation, der mit Hutschienen und einer in vorgegebenem Abstand vor den Hutschienen anzubringenden, mindestens ein Fenster aufweisenden Abdeckung für Vorrichtungen zur Energieübertragung und -verteilung vorgesehen ist, die in-Reiheneinbau auf den Hutschienen anzubringen sind und in das bzw. die Fenster der Abdeckung ragen. (Siehe EP-A-0 270 438).

Im Vergleich zu der Energieübertragung und -verteilung erfordert die Verteilung und Installation von Datenleitungen in Gebäuden andere Rücksichten.

Die Gehäuse, die die patch-Felder der Datenübertragungsinstallation aufnehmen, sind von einer besonderen Bauart und Tiefe (z.B. 400 bis 500 mm), da die Datenleitungen nur mit bestimmten Mindestradien gebogen werden dürfen und infolgedessen ein großes Verkabelungsvolumen unterzubringen ist. Die der Befestigung der Datenleitungssteckdosen unmittelbar dienenden sogenannten patch panels sind für die Durchführung der Montagearbeiten schwenkbar an einem Zwischenrahmen des Gehäuses angebracht.

Der Erfindung liegt die Aufgabe zugrunde, ein möglichst einfaches, übersichtliches Gebäudeinstallationssystem zu schaffen.

Gemäß der Erfindung ist als Lösung dieser Aufgabe die Verwendung eines Schrankes der eingangs genannten Art
für Vorrichtungen zur Datenübertragung und -verteilung und Schaffung eines patch-Feldes vorgesehen, die zum Zweck dieser Verwendung mit rückseitigen Vorkehrungen zur Befestigung auf den Hutschienen versehen sind und in einer dem genannten Abstand entsprechenden Tiefenabmessung ausgeführt sind derart, dass sie in das bzw. in die Fenster der Abdeckung ragen.

Mit der Beschränkung, z.B. auf höchstens vierundzwanzig Verbindungen in dem patch-Feld, die sich hier von selbst ergibt, ist die Unterbringung des Verkabelungsvolumens in dem z.B. nur 200 bis 225 mm tiefen Schrank für die Energieübertragung und -verteilung, wie einem Zählerschrank, Verteilerkasten usw., mit vertretbarer Mühe noch möglich und damit eine alle Verteiler- u.dgl. Funktionen erfüllende Einrichtung z.B. für Haushalte, kleinere Büros, Arztpraxen usw. geschaffen. Für größere Objekte soll es bei den oben erwähnten Gehäusen besonderer Bauart und Tiefe bleiben. Es kann und soll nicht generell die bisherige Installationsweise ersetzt werden, die Erfindung besteht insoweit in der Sicht des Maßes und der wie angegeben begrenzten Einsatzmöglichkeit. Im übrigen besteht die Erfindung, generell ausgedrückt, darin, die Montagetechnik der Einrichtungen zur Energieübertragung und -verteilung auf die Einrichtungen zur Datenübertragung und -verteilung zu übertragen und ggf. anzupassen.

Unter Einrichtungen zur Datenübertragung und -verteilung sind auch solche für Telefon und Fernsehen zu verstehen.

Als Vorrichtungen zur Datenübertragung und -verteilung, für die die erfindungsgemäße Verwendung vorgesehen ist, kommen in Reiheneinbau anzubringende, von vorn herein in entsprechender Tiefenabmessung ausgeführte Datenleitungssteckdosen in Betracht.

In besonders vorteilhafter Weiterbildung der Erfindung sind jedoch in Reiheneinbau anzubringende, in entsprechender Tiefenabmessung ausgeführte, vorzugsweise als Gehäuse gestaltete Aufnahmen für verschiedene Datenleitungssteckdosen vorgesehen, d.h. Datenleitungssteckdosen für Telefonkabel, Computerkabel, Fernsehkabel, ggf. Glasfaserkabel, desselben Herstellers oder verschiedener Hersteller. Die Datenleitungssteckdosen sind regelmäßig kleiner als die dem Rastermaß entsprechenden Aufnahmen und insofern für die weitere Erfindungsmaßnahme geeignet.
Damit werden Datenleitungssteckdosen für verschiedene Kabelarten, wie twistedpair-Kabel, Koaxialkabel und Glasfaserkabel, sowie Datenleitungssteckdosen verschiedener Hersteller in die gleiche Einbauform gebracht. Sie fügen sich - vorzugsweise sind sie ferner entsprechend einem Rastermaß des Schrankes und/oder eines Traggerüsts des Schrankes ausgeführt - als Modulargeräte, wie z.B. Leitungsschutzschalter, in die Platzvorgaben ein. Im übrigen kommt etwas seitlicher Abstand der Datenleitungssteckdosen voneinander zustande und damit etwas mehr Platz für die Verkabelung, da hier der Biegung der Datenleitungen zwischen der Rückwand und den Datenleitungssteckdosen noch eine seitliche Komponente überlagert werden kann.
Soweit möglich, wird man versuchen, einen Sitz oder eine Mehrzahl von Sitzen für verschiedene Datenleitungssteckdosen in derselben Aufnahme einzurichten. Im Regelfall wird jedoch eine spezielle Anpassung zumindest an die Systeme verschiedener Hersteller notwendig sein. Die Breite der Aufnahmen kann im Ausnahmefall das Doppelte oder die Hälfte des Normalmaßes betragen, nötigenfalls auch in noch anderer Weise abweichen.

Die Aufnahmen können vorne einen Sitz für die Datenleitungssteckdose aufweisen. In einem insbesondere vorgesehenen Fall soll der Sitz die Form eines Rahmens haben, an dem die Datenleitungssteckdose vorne mit einem Absatz anliegt und hinter dem sie mit federnden Widerhaken eingerastet ist. Zur Anpassung an andere für Datenleitungssteckdosen vorgesehene Befestigungsarten können jedoch auch Schraubverbindungen oder Klebestellen usw. vorbereitet sein.

Von besonderer Bedeutung ist ferner die weitere Ausgestaltung, dass die Aufnahmen hinter dem Sitz für die Datenleitungssteckdose einen nach unten und/oder, vorzugsweise, nach oben offenen Raum zur Herausführung der mit der Datenleitungssteckdose fest verbundenen Datenleitung in einer Biegung aufweisen.
Damit wird zugleich der Verkabelungsraum des patch-Feldes in gewisser Weise ein wenig weiter nach vorne erstreckt.

Weiter im einzelnen ist als vorteilhafte Ausgestaltung vorgesehen, dass die Aufnahmen zwei ebene, parallele, senkrechte Seitenwände aufweisen, an denen vorzugsweise vorne kurze Stutzen für den Eingriff in ein Fenster einer Abdeckung ausgebildet sind und zwischen denen ein schräger, vorzugsweise nach hinten ansteigender, Boden und im wesentlichen gleichläufig mit diesem eine schräge Decke angeordnet sind und der so gebildete Raum einen rückwärtigen Abschnitt der Datenleitungssteckdose aufnimmt, die mit einem vorderen Abschnitt aus der Aufnahme herausragt.

Die Datenleitungssteckdosen können auch Mehrfachsteckdosen sein oder in Mehrzahl in der Aufnahme angeordnet sein.

Um die Verkabelung bei der geringen Tiefe des zur Verfügung stehenden Raumes zu erleichtern, sind die betreffenden Datenleitungssteckdosen zweckmäßigerweise schräg zur Rückwand des Schrankes ausgerichtet, vorzugsweise zu der Rückwand hin ansteigend.

Die schräge statt der senkrechten Ausrichtung zur Rückwand verringert die Biegung der fest in dem Schrank zu verlegenden Datenleitungen zwischen ihrer Einführung an der Rückseite der Datenleitungssteckdose und der Weiterführung an der Rückwand des Schrankes. Die zu der Rückwand hin ansteigende Ausrichtung hat zur Folge, dass das auf der anderen Seite mit dem Stecker an die Steckdose angeschlossene Kabel, das vor der Steckdose herunterhängt, im Anschluß an den Stecker nur weniger gebogen wird.

Es ist jedoch auch möglich, die betreffenden Datenleitungssteckdosen parallel zur Rückwand des Schrankes auszurichten, so dass es auf die Tiefe des Verkabelungsraumes nicht mehr entscheidend ankommt. Die Ausrichtung der Datenleitungssteckdosen im übrigen kann dabei grundsätzlich alle Richtungen haben, vorzugsweise jedoch nach oben oder nach der einen oder anderen Seite.

Um bei der Montage weniger behindert zu sein, kann man auch in dem erfindungsgemäßen Schrank die Datenleitungssteckdosen an einer, vorzugsweise um eine senkrechte Achse, schwenkbaren Halterung anbringen, vorzugsweise das genannte Traggerüst schwenkbar anordnen.

Der Schrank kann sowohl die Vorrichtungen zur Energieübertragung und -verteilung als auch die Vorrichtungen zur Datenübertragung und -verteilung aufnehmen und so die Zentralstelle der gesamten Verkabelung eines Hauses in allen ihren Spielarten werden; er kann alle Komponenten und Leitungen aufnehmen.
Er kann aber auch allein die Vorrichtungen zur Datenübertragung und -verteilung und ein patch-Feld aufnehmen.

Die Zeichnungen geben ein Ausführungsbeispiel der Erfindung wieder.
- Fig. 1: zeigt einen Schrank der Elektroinstallation bei abgenommener Tür in isometrischer Darstellung,

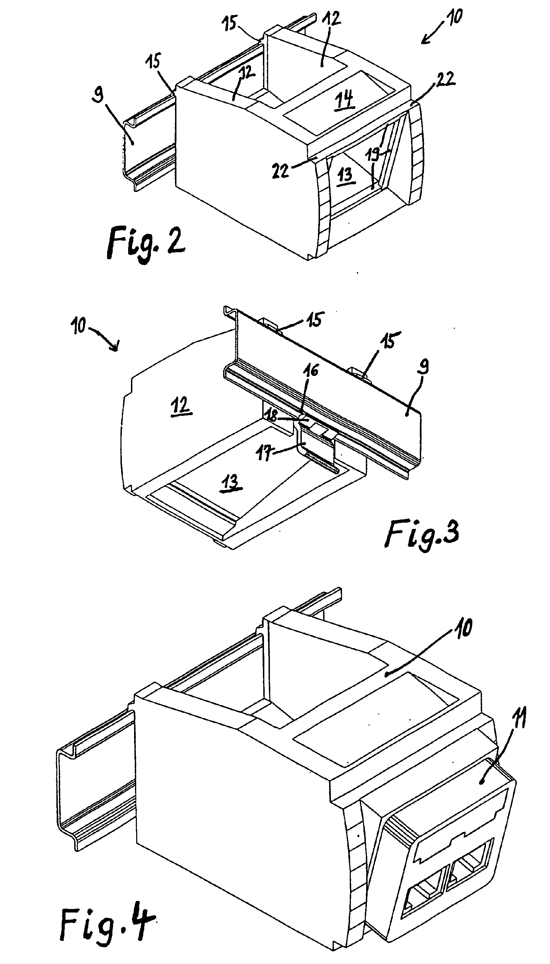

- Fig. 2: zeigt ein Einzelteil, nämlich eine Aufnahme für eine Datenleitungssteckdose, in isometrischer Darstellung schräg von vorne und oben,
- Fig. 3: zeigt die Aufnahme in isometrischer Darstellung schräg von hinten und unten,
- Fig. 4: zeigt die Aufnahme mit eingesetzter Datenleitungssteckdose in der isometrischen Darstellung der Fig. 2 in größerem Maßstab,
- Fig. 5: zeigt die Datenleitungssteckdose für sich in isometrischer Darstellung schräg von hinten,
- Fig. 6: zeigt schematisch einen Querschnitt durch einen Teil des Schrankes nach Fig. 1.

Der mit 1 bezeichnete Schrank stellt an sich einen Zählerschrank mit zwei Zählerfeldern 2 dar.

In dem linken Zählerfeld 2 ist ein Zählerplatz 4 angeordnet, d.h. die vorgefertigte Installation für einen bei 5 einzusetzenden Zähler einschließlich eines zugehörigen Verteilers mit Leitungsschutzschaltern 6 usw..

Das rechte Zählerfeld ist zu einer Funktionsfläche 3 für Datenübertragung und -verteilung umbestimmt worden und mit einem für diese Zwecke konzipierten Traggerüst, jedoch von der Bauart wie für die Energieübertragung und -verteilung, versehen worden.

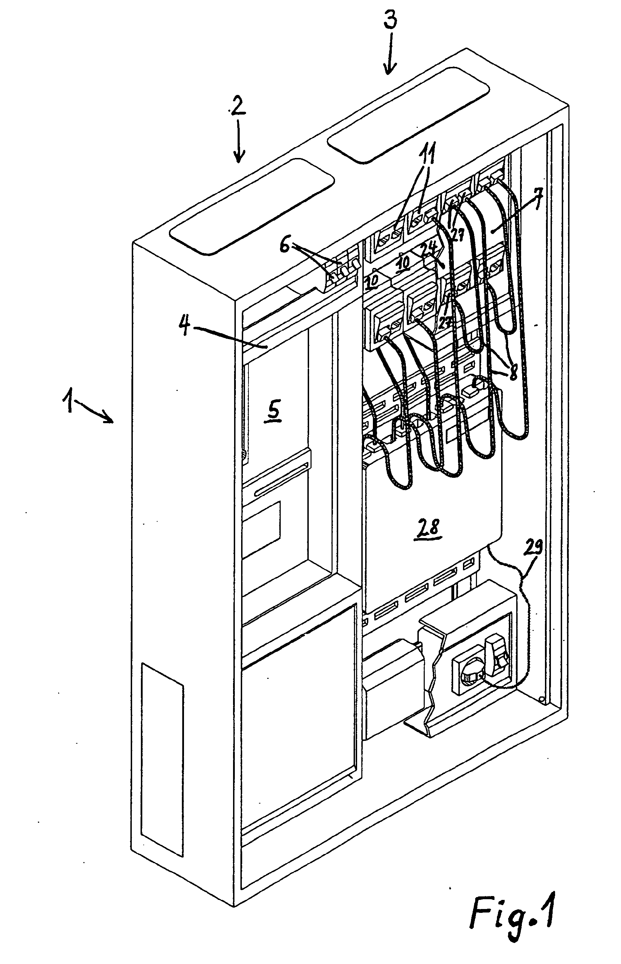

In einem oberen Abschnitt der Funktionsfläche 3 ist auf dem Traggerüst ein patch-Feld 7 für Datenkabel bzw. Datenleitungen 25 eingerichtet.
Das Traggerüst weist hier, in Fig. 1 verdeckte, Hutschienen 9 auf, auf denen Aufnahmen 10 für Datenleitungssteckdosen 11 in Reihe nebeneinander angebracht sind.

Die Aufnahmen 10 haben die Form eines Gehäuses mit zwei senkrechten parallelen Seitenwänden 12, einem zwischen diesen schräg nach hinten ansteigenden Boden 13 und einer zu dem Boden 13 parallelen Decke 14. Die Decke 14 erstreckt sich nur in einem vorderen Abschnitt; in dem restlichen hinteren Abschnitt ist das Gehäuse nach oben offen. Nach hinten wird es weitgehend durch die Hutschiene 9 abgeschlossen. Zur Befestigung auf der Hutschiene dienen zwei den oberen Flansch der Hutschiene übergreifende starre Haken 15 und ein den unteren Flansch übergreifender, mit einer schrägen Rutschfläche 16 und einem Rückbiegegriff 17 versehener Schnapphaken 18.

Als Sitz für die Datenleitungssteckdose 11 ist an den Innenseiten der Seitenwände 12, des Bodens 13 und der Decke 14 ein Rahmen 19 ausgebildet. Der Rahmen 19 ist senkrecht zu dem nach hinten ansteigenden Boden 13 und der mit ihm gleichlaufenden Decke 14 ausgerichtet.
An der Vorderseite der Seitenwände 12 ausgebildete, flache, leicht nach vorne ausgewölbte Stutzen 22 ragen, oben und unten bündig, in ein Fenster 23 einer Abdeckung 24.

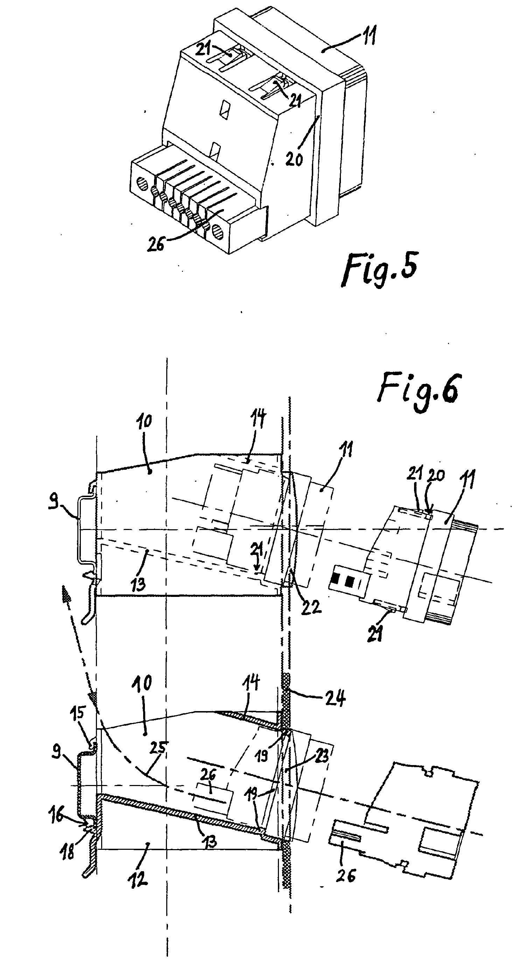

Die Datenleitungssteckdose 11 liegt mit einem Absatz 20 vorne an dem Rahmen 19 an und ist mit federnden Widerhaken 21 hinter ihm eingerastet. Mit einem Teil ihrer Länge erstreckt sie sich hinter dem Rahmen 19 in die Aufnahme 10 hinein, mit dem anderen Teil ragt sie nach vorne heraus.
Die einen Anschlußstutzen 26 der Datenleitungssteckdose 11 verlassende Datenleitung 25 der festen Installation ist schon in dem durch die Aufnahme 10 gebildeten Gehäuse abgebogen und im hinteren Bereich aus ihm nach oben herausgeführt (Fig. 6). Bereits im Bereich zwischen den beiden übereinander angeordneten Hutschienen 9 ist es weitgehend parallel zur, nicht gezeichneten, Rückwand des Schrankes 1 ausgerichtet. Infolge der aus der schrägen Anordnung des Rahmens 19 als Sitz der Datenleitungssteckdose 11 sich ergebenden Schrägstellung der Datenleitungssteckdose 11 braucht die Datenleitung 25 nur um einen entsprechend kleineren Winkel gebogen zu werden. Zumal die in den nebeneinander angeordneten Aufnahmen 10 sitzenden Datenleitungssteckdosen 1 etwas seitlichen Abstand voneinander haben, können die Datenleitungen 25 zusätzlich zu ihrer Biegung nach oben etwas zur Seite gebogen werden, womit sich der Biegeradius weiter vermindert.

Die Datenkabel 8 für die Herstellung der wahlfreien Verbindungen, d.h. einer ankommenden mit einer wegführenden Datenleitung, sind mit Steckern 27 angeschlossen und hängen in dem Schrankraum vor der Abdeckung 24 frei herunter. Die Anstellung der Datenleitungssteckdosen 11 schräg nach oben vermindert auch hier den Winkel der Umbiegung.

Die Datenleitungen 8 verbinden zum einen Teil zwei Datenleitungssteckdosen 11 und zum anderen Teil eine Datenleitungssteckdose 11 mit einem aktiven Element 28, beispielsweise einem HUB-Verstärker.
Bei 29 ist die Spannungsversorgung des aktiven Elements 28 angedeutet.

Für das aktive Element 28 und die Vorrichtungen zu seiner Spannungsversorgung weist das Traggerüst vorbereitete Plätze auf.

## Patentansprüche

1. Verwendung eines Schrankes der elektrischen Hausinstallation, der mit Hutschienen und einer in vorgegebenem Abstand vor den Hutschienen anzubringenden, mindestens ein Fenster aufweisenden Abdeckung für Vorrichtungen zur Energieübertragung und -verteilung vorgesehen ist, die in Reiheneinbau auf den Hutschienen anzubringen sind und in das bzw. die Fenster der Abdeckung ragen,
für Vorrichtungen zur Datenübertragung und -verteilung und Schaffung eines patch-Feldes, die zum Zweck dieser Verwendung mit rückseitigen Vorkehrungen zur Befestigung auf den Hutschienen versehen sind und in einer dem genannten Abstand entsprechenden Tiefenabmessung ausgeführt sind derart, dass sie in das bzw. in die Fenster der Abdeckung ragen.

2. Vorrichtung zur Verwendung nach Anspruch 1,
**gekennzeichnet durch** eine in Reiheneinbau anzubringende Datenleitungssteckdose.

3. Vorrichtung zur Verwendung nach Anspruch 1,
**gekennzeichnet durch** eine in Reiheneinbau anzubringende Aufnahme (10) für mindestens eine Ausführung einer Datenleitungssteckdose (11).

4. Vorrichtung nach Anspruch 2 oder 3,
**dadurch gekennzeichnet,**
**dass** sie ferner entsprechend einem Rastermaß des Schrankes und/oder eines Traggerüsts des Schrankes ausgeführt ist.

5. Vorrichtung nach Anspruch 3 oder 4,
**dadurch gekennzeichnet,**
**dass** die Aufnahme (10) als Gehäuse gestaltet ist.

6. Vorrichtung nach einem der Ansprüche 3 bis 5,
**gekennzeichnet durch** Datenleitungssteckdosen (11) für Telefonkabel, Computerkabel, Fernsehkabel, ggf. Glasfaserkabel, desselben Herstellers oder verschiedener Hersteller.

7. Vorrichtung nach einem der Ansprüche 3 bis 6,
**dadurch gekennzeichnet,**
**dass** die Aufnahme (10) vorne einen Sitz (19) für die Datenleitungssteckdose (11) aufweist, insbesondere in Form eines Rahmens (19), an dem die Datenleitungssteckdose (11) vorne mit einem Absatz (20) anliegt und hinter dem sie mit federnden Widerhaken (21) eingerastet ist.

8. Vorrichtung nach Anspruch 7,
**dadurch gekennzeichnet,**
**dass** die Aufnahme (10) hinter dem Sitz (19) für die Datenleitungssteckdose (11) einen nach unten und/oder, vorzugsweise, nach oben offenen Raum zur Herausführung der mit der Datenleitungssteckdose (11) fest verbundenen Datenleitung in einer Biegung aufweist.

9. Vorrichtung nach einem der Ansprüche 3 bis 8,
**dadurch gekennzeichnet,**
**dass** die Aufnahme (10) zwei ebene, parallele, senkrechte Seitenwände (12) aufweist, an denen vorzugsweise vorne kurze Stutzen (22) für den Eingriff in ein Fenster (23) einer Abdeckung (24) ausgebildet sind und zwischen denen ein schräger, vorzugsweise nach hinten ansteigender, Boden (13) und im wesentlichen gleichläufig mit diesem eine schräge Decke (14) angeordnet sind und der so gebildete Raum einen rückwärtigen Abschnitt der Datenleitungssteckdose (11) aufnimmt, die mit einem vorderen Abschnitt aus der Aufnahme (10) herausragt.

10. Vorrichtung nach einem der Ansprüche 2 bis 9,
**dadurch gekennzeichnet,**
**dass** die Datenleitungssteckdose (11) mindestens zum Teil schräg zur Rückwand des Schrankes (1) ausgerichtet ist, vorzugsweise zu der Rückwand hin ansteigend.

## Claims

1. Use of a cabinet for domestic electrical installation, which cabinet is provided with top-hat rails and a cover, which is to be fitted at a prespecified distance in front of the top-hat rails and has at least one window, for apparatuses for transmitting and distributing power which are to be fitted on the top-hat rails such that they are installed in series, and which project into the window or windows in the cover,
for apparatuses for transmitting and distributing data and creating a patch panel, which apparatuses, for the purpose of this use, are provided with rear preparatory means for fixing purposes on the top-hat rails and are formed at a depth which corresponds to the said distance in such a way that they project into the window or windows in the cover.

2. Apparatus for the use according to Claim 1,
**characterized by** a data-line socket which is to be fitted such that it is installed in series.

3. Apparatus for the use according to Claim 1,
**characterized by** a holder (10), which is to be fitted such that it is installed in series, for at least one design of a data-line socket (11).

4. Apparatus according to Claim 2 or 3,
**characterized in that**
it is also designed in accordance with a grid pattern of the cabinet and/or a support framework of the cabinet.

5. Apparatus according to Claim 3 or 4,
**characterized**
**in that** the holder (10) is in the form of a housing.

6. Apparatus according to one of Claims 3 to 5,
**characterized by** data-line sockets (11) for telephone cables, computer cables, television cables, possibly optical fibre cables, from the same manufacturer or from different manufacturers.

7. Apparatus according to one of Claims 3 to 6,
**characterized**
**in that** the holder (10) has a seat (19) at the front for the data-line socket (11), in particular in the form of a frame (19) against the front of which a step (20) of the data-line socket (11) bears and behind which the said data-line socket is latched in by sprung barbs (21).

8. Apparatus according to Claim 7,
**characterized**
**in that**, behind the seat (19) for the data-line socket (11), the holder (10) has an area, which is open at the bottom and/or, preferably, at the top, for guiding out the data line, which is firmly connected to the data-line socket (11), such that it is bent.

9. Apparatus according to one of Claims 3 to 8,
**characterized**
**in that** the holder (10) has two flat, parallel, perpendicular side walls (12) which have formed on them, preferably at the front, short connection pieces (22) for engaging in a window (23) in a cover (24) and between which a sloping base (13), which preferably rises to the rear, and, substantially in the same direction as the latter, a sloping covering (14) are arranged, and the area which is formed in this way holds a rear section of the data-line socket (11) whose front section projects from the holder (10).

10. Apparatus according to one of Claims 2 to 9,
**characterized**
**in that** the data-line socket (11) is oriented at least partly obliquely to the rear wall of the cabinet (1), preferably such that it rises towards the rear wall.

## Revendications

1. Utilisation d'une armoire électrique pour installations domestiques, qui est pourvue de profilés chapeau et d'un recouvrement, agencé à une distance prédéterminée devant les profilés chapeau et présentant au moins une fenêtre, pour des dispositifs destinés à la transmission et à la distribution d'énergie, lesdits dispositifs devant être montés sur les profilés chapeau suivant un montage en rangée et pénétrant dans la ou les fenêtres du recouvrement,
pour des dispositifs de transmission et de distribution de données et pour réaliser un champ composite ("patch"), ces dispositifs étant dotés de moyens sur leur face postérieure dans le but de cette utilisation en vue de la fixation sur les profilés chapeau et réalisés avec une dimension en profondeur qui correspond à ladite distance, de telle manière qu'ils pénètrent dans la ou les fenêtres du recouvrement.

2. Dispositif destiné à l'utilisation selon la revendication 1, **caractérisé par** une prise pour ligne de données destinée à être montée suivant un montage en rangée.

3. Dispositif destiné à l'utilisation selon la revendication 1, **caractérisé par** un logement (10), destiné à être monté suivant un montage en rangée, pour au moins un mode de réalisation d'une prise (11) pour ligne de données.

4. Dispositif selon la revendication 2 ou 3, **caractérisé en ce qu'**il est en outre réalisé de façon correspondante à une dimension de trame de l'armoire et/ou d'une ossature portante de l'armoire.

5. Dispositif selon la revendication 3 ou 4, **caractérisé en ce que** le logement (10) est conçu comme un boîtier.

6. Dispositif selon l'une des revendications 3 à 5, **caractérisé par** des prises (11) pour lignes de données destinées à des câbles de téléphone, des câbles d'ordinateurs, des câbles de télévision, le cas échéant des câbles à fibre de verre, provenant du même fabricant ou de différents fabricants.

7. Dispositif selon l'une des revendications 3 à 6, **caractérisé en ce que** le logement (10) comporte à l'avant un siège (19) pour la prise (11) pour ligne de données, en particulier sous la forme d'un cadre (19) contre lequel la prise (11) pour ligne de données s'applique à l'avant au moyen d'un talon (20), et derrière lequel elle est enclenchée au moyen d'un crochet antagoniste (21) à effet élastique.

8. Dispositif selon la revendication 7, **caractérisé en ce que** le logement (10) présente, derrière le siège (19) pour la prise (11) pour ligne de données, un espace ouvert vers le bas et/ou de préférence vers le haut, pour faire sortir la ligne de données fermement reliée à la prise (11) pour ligne de données, dans un coude.

9. Dispositif selon l'une des revendications 3 à 8, **caractérisé en ce que** le logement (10) présente deux parois latérales (12) planes, parallèles et verticales, sur lesquelles sont réalisés de préférence à l'avant des manchons courts (22) pour l'engagement dans une fenêtre (23) d'un recouvrement (24), et entre lesquelles sont agencés un fond oblique (13) ascendant de préférence vers l'arrière et un plafond oblique (14) sensiblement dans le même sens que le fond, et l'espace ainsi formé reçoit un tronçon de postérieur de la prise (11) pour ligne de données, laquelle fait saillie hors du logement (10) par un tronçon antérieur.

10. Dispositif selon l'une des revendications 2 à 9, **caractérisé en ce que** les prises (11) pour les lignes de données sont orientées au moins partiellement en oblique vers la paroi postérieure de l'armoire (1), de préférence en montant en direction de la paroi postérieure.
